# EUROPÄISCHE PATENTSCHRIFT

(11) **EP 0 345 910 B1**
(45) Veröffentlichungstag und Bekanntmachung des Hinweises auf die Patenterteilung: **30.06.1993**
(21) Anmeldenummer: 89201565.2
(22) Anmeldetag: 05.06.1989
(51) Int. Cl.: H02G 5/00

(54) **Stromschiene für Schienenverteiler, Schaltanlagen und dergleichen**
Bus bar for busways, circuits and the like
Rail de courant pour répartiteur, circuits ou équivalents

(30) Priorität: 09.06.1988 DE 3819575
(43) Veröffentlichungstag der Anmeldung: 13.12.1989
(73) Patentinhaber: Klöckner-Moeller GmbH, 53115 Bonn (DE)
(72) Erfinder: Ferenc, Boros, Dipl.-Ing., D-5204 Lohmar 1 (DE)

(56) Entgegenhaltungen:
- CH-A- 388 402
- DE-U- 1 905 584
- US-A- 2 904 621

## Beschreibung

Die Erfindung betrifft eine Stromschiene für Schienenverteiler, Schaltanlagen und dergleichen mit einem C-förmigen Profilquerschnitt, die insbesondere in Stromverteilungsanlagen als Sammelschienen dienen und vorzugsweise in einer Ebene mittels Schienenbefestigungen parallel zueinander angeordnet sind.

Üblich sind Stromschienen mit einem vollen rechteckigen Querschnitt, die in bestimmten Abständen nach DIN oder nach den physikalischen Gegebenheiten parallelgeschaltet nebeneinander befestigt werden. Die Schienen unterliegen Temperatureinflüssen, aber auch hohen mechanischen Beanspruchungen, insbesondere im Kurzschlußfalle.

In Wechsel- und Drehstromsystemen bauen sich beim Stromfluß um die Schienen Magnetfelder auf, die an den Randbereichen der Schienen zu einer höheren Stromdichte führen.

In Gleichstromanlagen kann die Anzahl der parallel geschalteten Schienen fast unbegrenzt groß gewählt werden. Bei Wechsel- und Drehstrom nehmen jedoch infolge der Stromverdrängung die äußeren Schienen eine größere Belastung auf. Es werden daher in der Regel höchstens vier Schienen parallel geschaltet wobei man den Abstand zwischen den beiden innenliegenden Schienen vergrößert, um eine gleichmäßigere Stromaufteilung zu erhalten.

Bekannt sind auch Stromschienen mit einem gleichmäßigen C-förmigen Profilquerschnitt, wobei dieser der Befestigung von Anschlußklemmen mittels geeigneter Klemmschuhe und dergleichen dient.

Ebenso bekannt ist es, C-förmige Profilschienen zur Führung höherer Stromstärken mit einer Verstärkungsschiene zu versehen, die mit ihr leitfähig verbunden ist, wie in der DE-U 19 05 584 gezeigt und beschrieben ist.

In Sammelschienensystemen, bei denen der lichte Hauptleiterabstand kleiner als 0,8 mal Hauptleitermittenabstand ist und die Schienen in einer gemeinsamen Ebene senkrecht oder waagerecht parallel zueinander montiert werden, macht sich die negative Wirkung der Stromverdrängung verstärkt bemerkbar.

Der Erfindung liegt die Aufgabe zugrunde, Stromschienen mit einem C-förmigen Profilquerschnitt nach dem Oberbegriff des Anspruches 1 so auszubilden, daß diese ohne eine Vergrößerung des Leiterquerschnittes eine höhere Stromtragfähigkeit gegenüber den herkömmlichen Schienenformen aufweist.

Diese Aufgabe wird gemäß der Erfindung durch das Kennzeichen des Anspruches 1 gelöst, während in den Ansprüchen 2 bis 4 besonders vorteilhafte Weiterbildungen der Erfindung gekennzeichnet sind.

Gemäß der Erfindung liegt infolge der ungleichmäßigen Wanddicke die Querschnittsanhäufung an den C-förmigen Profilquerschnitten dort, wo die Stromdichte an den Schienen am höchsten ist. Damit wird bei einem durch die Erfindung insgesamt geringeren Profilquerschnitt, aufgrund geringerer Wärmeverluste, eine bessere Ausnutzung des Querschnittes für die Stromführung erreicht. Bei gleichem Gesamtquerschnitt können um bis zu 50% höhere Ströme geführt werden, als bei den bisher eingesetzten parallelgeschalteten Rechteckquerschnitten.

Die Erfindung bietet Vorteile sowohl in elektrischer, mechanischer als auch thermischer Hinsicht. So ist die Stromverteilung in einem C-förmigen Schienenprofil mit ungleichmäßiger Wanddicke entsprechend der vorliegenden Erfindung über den Profilquerschnitt gegenüber bekannten Stromschienen gleichmäßiger und die erzeugte Verlustwärme niedriger, so daß sich durch die gleichmäßigere Stromverteilung die Ausnutzung der eingesetzten Werkstoffe, wie Kupfer, Aluminium oder Aluminiumlegierungen, um mindestens 30 bis 50% erhöhen läßt.

Auch das Widerstandsmoment solcher Stromschienen mit C-förmigem Profilquerschnitt wird bei gleichem Materialeinsatz durch die günstigere Materialverteilung über den Profilquerschnitt wesentlich verbessert.

Diese verbesserten mechanischen Werte ermöglichen auch bei hohen dynamischen Belastungen große Stützabstände. Außerdem ergeben sich Verbesserungen der mechanischen Werte in beiden Querschnittsachsen des C-förmigen Profilquerschnitts, so daß auch im Kurzschlußfalle Verwindungen solcher Stromschienen vermieden werden können.

Bei gleichem oder bis zu 25% geringerem Materialeinsatz wird die erzeugte Wärmemenge im C-förmigen Profilquerschnitt niedriger als bei den bekannten Stromschienen, was für die gesamte Wärmebilanz der mit solchen Stromschienen ausgestatteten Verteilersysteme eine nicht zu vernachlässigende Entlastung bedeutet. Durch eine Abschließung des Schienenspaltes ist es insbesondere bei senkrechter Montage derartiger Stromschienen möglich, eine Belüftung solcher Schienensysteme durch die sich ergebende Kaminwirkung innerhalb der Schienenprofile zu erreichen. Bei waagerechter Montage kann zusätzlich eine Zwangsbelüftung des Innenraumes der Stromschiene vorgesehen sein.

Ein bevorzugtes Ausführungesbeispiel der Erfindung ist in der Zeichnung schematisch dargestellt. Es zeigen
Fig. 1 eine senkrechte parallele Anordnung mehrerer Stromschienen mit einem C-förmigen Profilquerschnitt in einer gemeinsamen Montageebene und
Fig. 2 eine vergrößerte Schnittdarstellung durch eine der Stromschienen gemäß Schnittlinie II - II von Fig.1

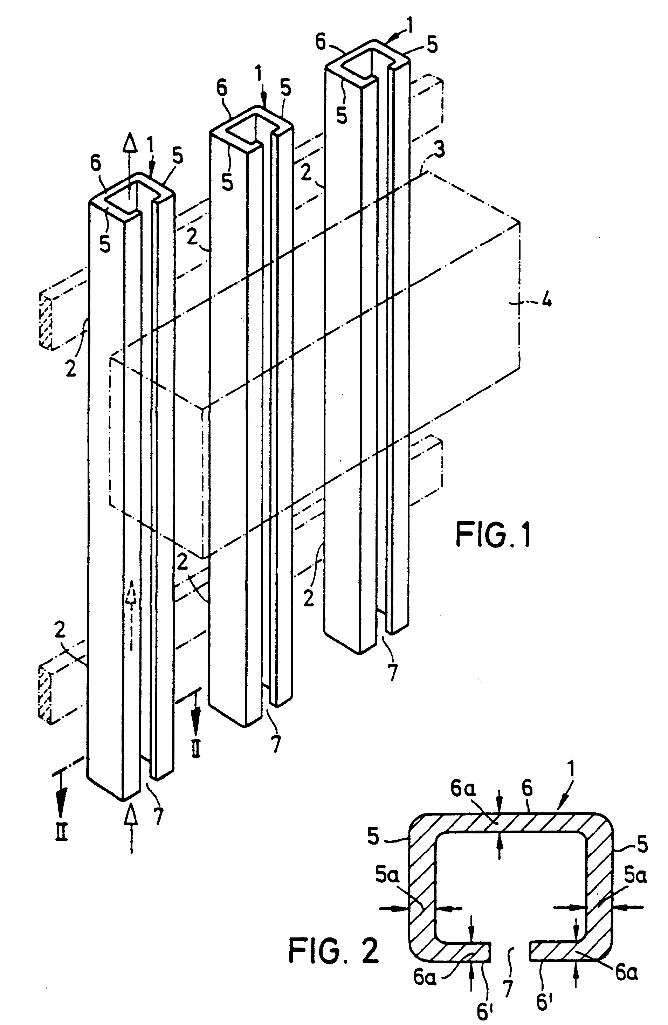

In Fig. 1 sind drei Stromschienen 1 mit einem C-förmigen Profilquerschnitt in einer gemeinsamen Ebene parallel nebeneinander montiert, wobei die Schienenbefestigungen 2 hinter der Anschlußebene 3 für elektrische Schaltgeräte 4 oder dergleichen liegen, so daß die Anschlußebene 3 frei ist von Befestigungselementen für die Stromschiene 1 und somit für Gerätebefestigungen und sonstige Anschlüsse an allen Stellen zur Verfügung steht.

Wie anhand der Schnittdarstellung von Fig. 2 zu erkennen ist, sind die Wanddicken des C-förmigen Profilquerschnittes der drei Stromschienen 1 von Fig. 1 derart ungleichmässig, daß diejenigen Wände 5, die bei nebeneinander montierten Stromschienen 1 einander am nächsten liegen, eine grössere Dicke 5a haben, als die parallel zur Anschlußebene 3 liegenden Wände 6, 6'. Die Schienenbefestigung erfolgt also hinter der Anschlußebene 3, so daß die gesamte Frontebene der Stromschienen 1 für den Anschluß elektrischer Schaltgeräte 3 und dergleichen frei bleibt.

Bei senkrechter Anordnung der Stromschienen 1 ergibt sich durch die Kaminwirkung eine natürliche Belüftung des Schienenquerschnittes, die gegebenfalls noch durch eine Abdeckung des Längsschlitzes 7 des C-Profils der Stromschienen 1 in ihrer Wirkung weiter verbessert werden kann. Bei waagerechter Montage der Stromschiene 1 kann eine zusätzliche Zwangsbelüftung des Innenraumes der Schienen vorgesehen sein.

Wie insbesondere Fig. 2 erkennen läßt, ist die Wanddicke 5a der dickeren Wände 5 des C-förmigen Profilquerschnittes vorzugsweise um etwa 50% größer als die Wanddicke 6a der parallel zur Anschlußebene 3 liegenden Wände 6, 6' der Stromschienen.

## Patentansprüche

1. Stromschiene für Schienenverteiler, Schaltanlagen und dergleichen mit einem C-förmigen Profilquerschnitt, die insbesondere in Stromverteilungsanlagen als Sammelschienen dienen und vorzugsweise in einer Ebene mittels Schienenbefestigungen parallel zueinander angeordnet sind, dadurch gekennzeichnet, daß die Wanddicken (5a, 6a) des C-förmigen Profilquerschnittes derart ungleichmäßig sind, daß diejenigen Wände (5), die bei nebeneinander montierten Stromschienen (1) einander am nächsten liegen, eine größere Dicke (5a) aufweisen als die parallel zur Anschlußebene (3) liegenden Wände (6, 6').

2. Stromschienen nach Anspruch 1, dadurch gekennzeichnet, daß die Wanddicke (5a) der dickeren Wände (5) des C-förmigen Profilquerschnittes um vorzugsweise etwa 50% größer ist als diejenige der parallel zur Anschlußebene (3) liegenden Wände (6, 6').

3. Stromschiene nach Anspruch 1, dadurch gekennzeichnet, daß der Längsschlitz (7) des C-Profils der Stromschiene (1) abgedeckt ist.

4. Stromschiene nach Anspruch 3, dadurch gekennzeichnet, daß eine Zwangsbelüftung des Innenraumes der Stromschiene (1) vorgesehen ist.

## Claims

1. Conductor rail for busbar trunking systems, switchgear assemblies and similar installations, having a C-shaped cross-section and serving in particular in power distribution systems as busbars and preferably being arranged in one plane parallel to each other by means of busbar mountings, characterized in that the wall thicknesses (5a, 6a) of the C-shaped cross-section are irregular in such a fashion that the walls (5) situated closest together when conductor rails (1) are mounted adjacent to each other are greater in thickness (5a) than the walls (6, 6') parallel to the connecting plane (3).

2. Conductor rails per claim 1, characterized in that the wall thickness (5a) of the thicker walls (5) of the C-shaped cross-section is preferably approximately 50% greater than that of the walls (6, 6') parallel to the connecting plane (3).

3. Conductor rail per claim 1, characterized in that the longitudinal slot (7) of the C-section of the conductor rail (1) is shrouded.

4. Conductor rail per claim 3, characterized in that forced ventilation of the inside of the conductor rail (1) is provided.

## Revendications

1. Rails conducteurs pour canalisations préfabriquées, installations de circuits électriques et installations similaires, présentant une section transversale en forme de C et utilisés comme barres omnibus, particulièrement dans les installations de distribution électrique et disposés, de préférence, en parallèle dans un plan, au moyen d'éléments de fixation pour rails, caractérisés en ce que les épaisseurs de paroi (5a, 6a) de la section transversale en forme de C sont irrégulières de manière à ce que les parois (5), disposées le plus près possible l'une de l'autre dans le cas de rails conducteurs (1) montés côte à côte, présentent une épaisseur plus grande (5a) que les parois (6, 6') disposées parallèlement au plan de connexion. (3).

2. Rails conducteurs selon la revendication 1, caractérisés en ce que l'épaisseur de paroi (5a) des parois plus épaisses (5) de la section transversale en forme de C est, de préférence, de 50 % plus grande que celle des parois (6, 6') disposées parallèlement au plan de connexion (3).

3. Rails conducteurs selon la revendication 1, caractérisés en ce que la fente oblongue (7) de la section tranversale en forme de C des rails conducteurs (1) est recouverte.

4. Rails conducteurs selon la revendication 3, caractérisés en ce qu'une ventilation forcée de l'intérieur des rails conducteurs (1) est prévue.
